# EUROPÄISCHE PATENTSCHRIFT

(11) **EP 0 715 701 B1**
(45) Veröffentlichungstag und Bekanntmachung des Hinweises auf die Patenterteilung: **07.10.1998**
(21) Anmeldenummer: 95923179.6
(22) Anmeldetag: 29.06.1995
(51) Int. Cl.: F16L 1/24

(54) **AUFTRIEBSKÖRPER FÜR SCHWIMMSCHLÄUCHE**
FLOAT FOR FLOATING FLEXIBLE PIPES
FLOTTEUR POUR TUYAUX SOUPLES FLOTTANTS

(30) Priorität: 02.07.1994 DE 4423299
(43) Veröffentlichungstag der Anmeldung: 12.06.1996
(73) Patentinhaber: PHOENIX AKTIENGESELLSCHAFT, 21079 Hamburg (DE)
(72) Erfinder: FRIEDERICH, Hans-Werner, D-21423 Winsen (DE); HELLMIG, Winfried, D-21614 Buxtehude (DE); MAASS, Uwe, D-22149 Hamburg (DE)
(86) Internationale Anmeldenummer: DE9500831
(87) Internationale Veröffentlichungsnummer: WO9601385

(56) Entgegenhaltungen:
- DE-C- 940 787
- FR-A- 2 091 733
- FR-A- 2 306 394

## Beschreibung

Die Erfindung betrifft einen Auftriebskörper für Schwimmschläuche, umfassend einen mehrschichtigen Schaumkörper, der den Schwimmschlauch umgibt; eine Textilabdeckung, die sich auf dem Schaumkörper befindet und insbesondere mehrlagig und gekreuzt ausgebildet ist; sowie eine äußere Abdeckung, die aus einem Elastomer, einem thermoplastischen Elastomer (TPE) oder einem Thermoplast besteht (FR-A-2 091 733).

Auftriebskörper für Schwimmschläuche werden heute als integrierte Schwimmkörper so hergestellt, daß die Schaumschichten zu einer Einheit verschweißt oder verklebt werden. Über diesen Schaumkörper wird eine Textilabdeckung und eine äußere Abdeckung aus den oben genannten Werkstoffen angeordnet. Dabei sind die beiden Abdeckungen in den Endbereichen fest mit dem eigentlichen Schlauchkörper verbunden.

Durch äußere Einwirkungen sind bei derart aufgebauten Schwimmschläuchen folgende Schadensbilder zu beobachten:
a) Infolge sehr hoher axialer Belastung kommt es zum Abreißen der beiden Abdeckungen in den Endbereichen.
b) Infolge axialer und dynamischer Belastung sowie Knickbelastung tritt häufig ein radialer Bruch des Auftriebskörpers (Schwimmkörpers) mit gleichzeitigem Bruch der beiden Abdeckungen ein.
c) Infolge eines partiellen Abriebes sowie Schlitzen an scharfen Gegenständen kommt es zu einem Einreißen der beiden Abdeckungen.

Zwecks Beseitigung der oben genannten Schwachstellen, insbesondere zwecks Erhöhung des Schlitzwiderstandes und der Abriebsbeständigkeit wird erfindungsgemäß der Auftriebskörper gemäß Kennzeichen des Patentanspruchs 1 mit einer zusätzlichen textilen Querarmierung, die in einem Winkel zur Achse von 75 bis 90°, insbesondere 85 bis 90°, verläuft, versehen, wobei die Querarmierung zwischen der Textilabdeckung und der äußeren Abdeckung angeordnet ist. Außerdem sind die Schaumschichten des Auftriebskörpers in ihrem radialen Aufbau teilweise miteinander verschweißt, teilweise durch eine Gleitfolie voneinander getrennt.

Zweckmäßige Ausgestaltungen der Erfindung sind in den Patentansprüchen 2 bis 16 genannt.

Die Erfindung wird nun anhand von Ausführungsbeispielen unter Bezugnahme auf schematische Zeichnungen erläutert. Es zeigen:
- Fig. 1: einen Axialschnitt eines Auftriebskörpers mit einem zweckmäßigen Grundaufbau;
- Fig. 2: einen Axialschnitt eines Auftriebskörpers mit den Segmenten (A, B);
- Fig. 3: einen Axialschnitt des Schaumkörpers mit den Schnitten (C, D);
- Fig. 4: einen Axialschnitt des Eckbereiches von Stirnfläche und zylindrischem Körper mit den Segmenten (E, F) und einer außen angeordneten Verstärkung;
- Fig. 5: einen Radialschnitt des Auftriebskörpers mit in radialer Richtung angeordneten Streifen;
- Fig. 6: einen Axialschnitt des Auftriebskörpers mit in radialer Richtung angeordneten Ringen.

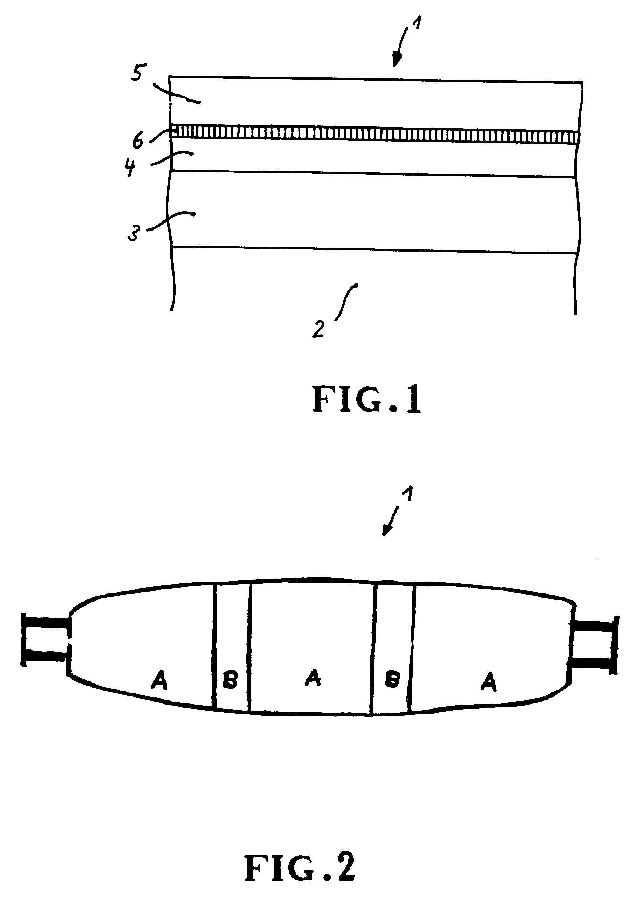

Fig. 1 zeigt folgenden Schichtenaufbau des Auftriebskörpers (1):
2 Schwimmschlauch
3 Schaumkörper
4 Textilabdeckung
5 äußere Abdeckung
6 textile Querarmierung

Die Querarmierung (6), die zwischen Textilabdeckung (4) und der äußeren Abdeckung (5) angeordnet ist, ist einlagig ausgebildet, wobei bei einem Winkelverlauf von 90° die Ringe dicht aneinander liegen. Die Textilabdeckung (4) und die Querarmierung (6) bestehen dabei vorzugsweise aus Polyamid oder Polyester.

Der Schaumkörper besteht insbesondere aus einem Polyethylenschaum. Hinsichtlich der äußeren Abdeckung sind folgende Werkstoffe zweckmäßig:

| | |
|---|---|
| Elastomer | Ethylen-Propylen-Dien-Mischpolymerisat (EPDM) |
| TPE | Verschnitt aus Polyethylen und Polypropylen |
| Thermoplast | Polyethylen (PE), Polypropylen (PP), Polyvinylchlorid (PVC) |

Die in Fig. 2 dargestellten Segmente (A, B) sind im Zusammenhang mit zweckmäßigen Ausführungsformen des Schaumkörpers (3) und der Textilabdeckung (4) zu sehen. Im einzelnen:
- Der Schaumkörper (3) ist in axialer Richtung abwechselnd aus harten Segmenten (A) und weichen Segmenten (B) aufgebaut, wobei im Stirnflächenbereich die Segmente (A) hart sind.
- Die Textilabdeckung (4) weist in den Segmenten (A, B) abwechselnd einen Winkel zur Achse von 54° (Segment A) und 65° (Segment B) auf, wobei im Stirnflächenbereich der Winkel 54° beträgt.

Durch diese Segmentierung unter Bildung von Gelenken in den Segmenten (B) wird die Verschleißanfälligkeit des Auftriebskörpers in erheblichem Maße reduziert.

Der Winkel der Textilabdeckung (4) kann im Rahmen einer Alternative auch konstant verlaufen, wobei der Winkel zur Achse zweckmäßigerweise 60° beträgt.

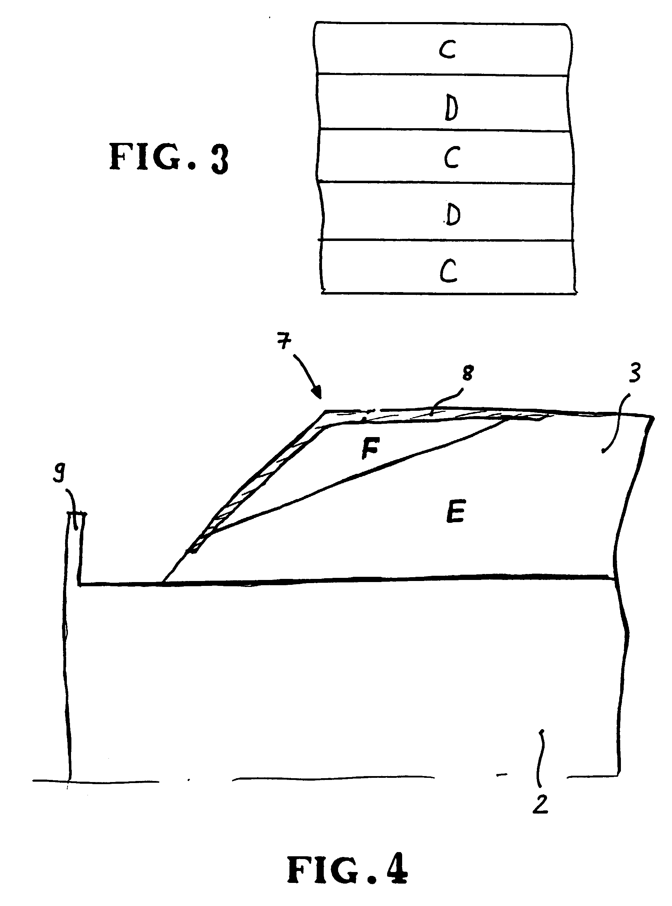

Fig. 3 zeigt den Schaumkern (3), der in radialer Richtung abwechselnd aus harten Schaumschichten (C) und weichen Schaumschichten (D) aufgebaut ist, wobei die äußeren Schichten (C) hart sind. Die Schaumschichten (C, D) sind in ihrem radialen Aufbau teilweise miteinander verschweißt, teilweise durch eine Gleitfolie voneinander getrennt. Gegebenenfalls können zwischen den Schaumschichten (C, D) eine oder mehrere textile Festigkeitsträgerschichten, insbesondere auf der Basis von Polyamid oder Polyester, eingebaut sein.

Nach Fig. 4 ist der Schaumkörper (3) im Eckbereich (7) von Stirnfläche und zylindrischem Körper aus einem weichen Schaumsegment (F) und einem harten Schaumsegment (E) gebildet, wobei zusätzlich eine außenliegende Verstärkung (8) vorhanden ist, insbesondere auf der Basis von Polyamid oder Polyester. Der Schwimmschlauch selbst ist mit einem Flansch (9) versehen.

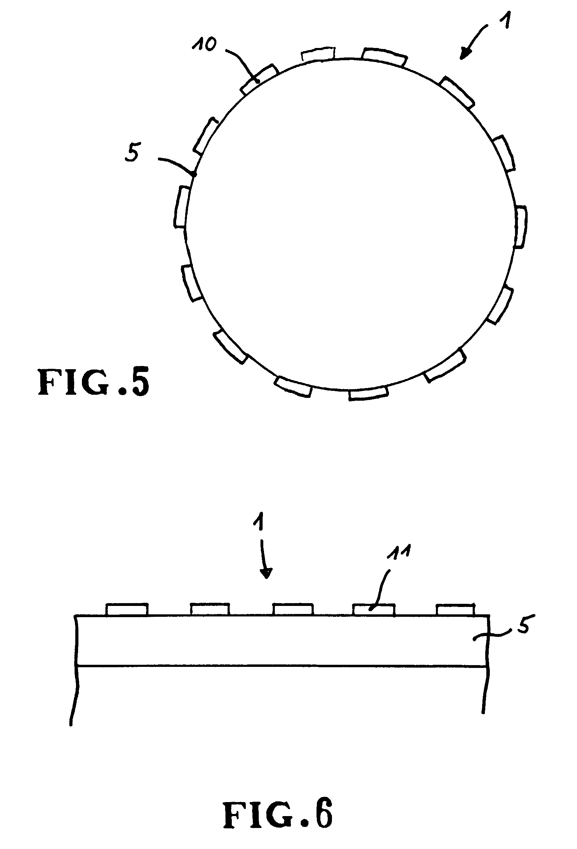

Fig. 5 zeigt die äußere Abdeckung (5) des Auftriebskörpers (1), wobei außen in axialer Richtung in gegenseitigem Abstand Streifen (10) aus hochabriebfestem Werkstoff angebracht sind.

## Patentansprüche

1. Auftriebskörper (1) für Schwimmschläuche, umfassend
- einen mehrschichtigen Schaumkörper (3), der den Schwimmschlauch (2) umgibt;
- eine Textilabdeckung (4), die sich auf dem Schaumkörper (3) befindet und insbesondere mehrlagig und gekreuzt ausgebildet ist; sowie
- eine äußere Abdeckung (5), die aus einem Elastomer, einem thermoplastischen Elastomer oder einem Thermoplast besteht;
dadurch gekennzeichnet, daß
- der Auftriebskörper (1) mit einer zusätzlichen textilen Querarmierung (6), die in einem Winkel zur Achse von 75 bis 90°C, insbesondere 85 bis 90°C, verläuft, versehen ist, wobei die Querarmierung zwischen der Textilabdeckung (4) und der äußeren Abdeckung (5) angeordnet ist; und daß
- die Schaumschichten (C, D) in ihrem radialen Aufbau teilweise miteinander verschweißt sind, teilweise durch eine Gleitfolie voneinander getrennt sind.

2. Auftriebskörper nach Anspruch 1, dadurch gekennzeichnet, daß die Querarmierung (6) einlagig ausgebildet ist, wobei bei einem Winkelverlauf von 90° die Ringe dicht beieinander liegen.

3. Auftriebskörper nach Anspruch 1 oder 2, dadurch gekennzeichnet, daß die Textilabdeckung (4) und die Querarmierung (6) aus Polyamid oder Polyester bestehen.

4. Auftriebskörper nach einem der Ansprüche 1 bis 3, dadurch gekennzeichnet, daß der Schaumkörper (3) aus Polyethylenschaum besteht.

5. Auftriebskörper nach einem der Ansprüche 1 bis 4, dadurch gekennzeichnet, daß der Schaumkörper (3) in radialer Richtung abwechselnd aus harten Schaumschichten (C) und weichen Schaumschichten (D) aufgebaut ist, wobei die äußeren Schichten (D) jeweils hart sind.

6. Auftriebskörper nach einem der Ansprüche 1 bis 5, dadurch gekennzeichnet, daß zwischen den Schaumschichten (C, D) eine oder mehrere textile Festigkeitsträgerschichten eingebaut sind.

7. Auftriebskörper nach einem der Ansprüche 1 bis 6, dadurch gekennzeichnet, daß der Schaumkörper (3) in axialer Richtung abwechselnd aus harten Segmenten (A) und weichen Segmenten (B) aufgebaut ist, wobei im Stirnflächenbereich die Segmente (A) hart sind.

8. Auftriebskörper nach einem der Ansprüche 1 bis 7, dadurch gekennzeichnet, daß der Schaumkörper (3) im Eckbereich (7) von Stirnfläche und zylindrischem Körper aus einem weichen Schaumsegment (F), der auf einem harten Schaumsegment (E) angeordnet ist, gebildet ist, wobei zusätzlich eine außenliegende Verstärkung (8) vorhanden ist, insbesondere auf Basis von Polyamid und Polyester.

9. Auftriebskörper nach einem der Ansprüche 1 bis 8, dadurch gekennzeichnet, daß die Textilabdeckung (4) einen Winkel zur Achse von 54 bis 65° aufweist.

10. Auftriebskörper nach Anspruch 9, dadurch gekennzeichnet, daß der Winkel konstant verläuft und dabei insbesondere 60° beträgt.

11. Auftriebskörper nach Anspruch 9, dadurch gekennzeichnet, daß der Winkelverlauf segmentiert ist, und zwar abwechselnd in einem Winkel von 54° (Segment A) und 65° (Segment B), wobei im Stirnflächenbereich der Winkel 54° beträgt.

12. Auftriebskörper nach einem der Ansprüche 1 bis 11, dadurch gekennzeichnet, daß die äußere Abdeckung (5) aus einem witterungs- und alterungsbeständigen Elastomer, insbesondere aus Ethylen-Propylen-Dien-Mischpolymerisat, besteht.

13. Auftriebskörper nach einem der Ansprüche 1 bis 11, dadurch gekennzeichnet, daß die äußere Abdeckung (5) aus einem thermoplastischen Elastomer auf Basis eines Polyethylen-Polypropylen-Verschnittes besteht.

14. Auftriebskörper nach einem der Ansprüche 1 bis 11, dadurch gekennzeichnet, daß die äußere Abdeckung (5) aus einem Thermoplast auf der Basis von Polyethylen, Polypropylen oder Polyvinylchlorid besteht.

15. Auftriebskörper nach einem der Ansprüche 1 bis 14, dadurch gekennzeichnet, daß auf der äußeren Abdeckung (5) in axialer Richtung in gegenseitigem Abstand Streifen (10) aus hochabriebfestem Werkstoff angebracht sind.

16. Auftriebskörper nach einem der Ansprüche 1 bis 15, dadurch gekennzeichnet, daß auf der äußeren Abdeckung (5) in radialer Richtung hochabriebfeste Ringe (11), insbesondere im Kennzeichnungsbereich, angebracht sind.

## Claims

1. A float (1) for floating hoses, comprising
- a multilayer foam body (3) which surrounds the floating hose (2);
- a textile covering (4) which lies on the foam body (3) and in particular is made multilayer and crossed; as well as
- an outer covering (5) which consists of an elastomer, a thermoplastic elastomer or a thermoplastic;
characterized in that
- the float (1) is provided with an additional textile cross-armouring (6) which runs at an angle to the axis of 75 to 90°, in particular 85 to 90°, the cross-armouring (6) being arranged between the textile covering (4) and the outer covering (5);
and that
- in their radial build-up the foam layers (C, D) are partially welded together but partially separated from one another by a sliding foil.

2. A float as in Claim 1, characterized in that the cross-armouring (6) is formed in one layer, the rings lying tightly together at an angular course of 90°.

3. A float as in Claim 1 or 2, characterized in that the textile covering (4) and the cross-armouring (6) consist of polyamide or polyester.

4. A float as in one of the Claims 1 to 3, charaterized in that the foam body (3) consists of polyethylene foam.

5. A float as in one of the Claims 1 to 4, characterized in that the foam body (3) is built up in the radial direction of alternate layers of hard foam (C) and soft foam (D), the outer layers (D) being hard in each case.

6. A float as in one of the Claims 1 to 5, characterized in that between the foam layers (C, D) one or more textile strength-carrier layers are built in.

7. A float as in one of the Claims 1 to 6, characterized in that the foam body (3) is built up in the axial direction of alternate hard segments (A) and soft segments (B), the segments (A) in the region of the endfaces being hard.

8. A float as in one of the Claims 1 to 7, characterized in that in the corner region (7) of the endface and the cylindrical body the foam body (3) is formed of a segment (F) of soft foam which is arranged upon a segment (E) of hard foam, there being in addition an external reinforcement (8), especially on the basis of polyamide and polyester.

9. A float as in one of the Claims 1 to 8, characterized in that the textile covering (4) exhibits an angle to the axis of 54 to 65°.

10. A float as in Claim 9, characterized in that the angular course is constant and moreover amounts especially to 60°.

11. A float as in Claim 9, characterized in that the angular course is segmented, that is, alternately at an angle of 54° (segment A) and 65° (segment B), the angle in the region of the endfaces amounting to 54°.

12. A float as in one of the Claims 1 to 11, characterized in that the outer covering (5) consists of an elastomer resistant to weather and ageing, especially of ethylene-propylene-diene-copolymer.

13. A float as in one of the Claims 1 to 11, characterized in that the outer covering (5) consists of a thermoplastic elastomer on the basis of a polyethylene-polypropylene blend.

14. A float as in one of the Claims 1 to 11, characterized in that the outer covering (5) consists of a thermoplastic on the basis of polyethylene, polypropylene or polyvinylchloride.

15. A float as in one of the Claims 1 to 14, characterized in that strips (10) of highly abrasion-resistant material are applied at mutual intervals in the direction axial to the outer covering (5).

16. A float as in one of the Claims 1 to 15, characterized in that rings (11) highly resistant to abrasion are applied in the direction radial to the outer covering (5), especially in the marking range.

## Revendications

1. Flotteur (1) pour tuyaux souples flottants, comprenant
- un corps de mousse (3) en plusieurs couches, qui entoure le tuyau souple flottant (2);
- une couverture textile (4), qui se trouve sur le corps de mousse (3) et est réalisée, en particulier, sous une structure multicouche et croisée; ainsi que
- une couverture extérieure (5), qui se compose d'un élastomère, d'un élastomère thermoplastique ou d'une matière thermoplastique;
caractérisé en ce que
- le flotteur (1) est pourvu d'une armature textile additionnelle de renforcement transversal (6), qui s'étend sous un angle de 75 à 90°, en particulier de 85 à 90°, par rapport à l'axe, l'armature de renforcement transversal étant alors disposée entre la couverture textile (4) et la couverture extérieure (5); et en ce que
- les couches de mousse (C, D) sont, dans leur agencement radial, en partie soudées l'une à l'autre, en partie séparées l'une de l'autre par une feuille de glissement.

2. Flotteur selon la revendication 1, caractérisé en ce que l'armature de renforcement transversal (6) est réalisée en une seule couche, les anneaux étant alors placés étroitement l'un à côté de l'autre dans le cas d'une valeur d'angle de 90°.

3. Flotteur selon la revendication 1 ou 2, caractérisé en ce que la couverture textile (4) et l'armature de renforcement transversal (6) se composent de polyamide ou de polyester.

4. Flotteur selon l'une des revendications 1 à 3, caractérisé en ce que le corps de mousse (3) se compose de mousse de polyéthylène.

5. Flotteur selon l'une des revendications 1 à 4, caractérisé en ce que le corps de mousse (3) est constitué de couches de mousse dures (C) et de couches de mousse souples (D), disposées en alternance dans la direction radiale, les couches extérieures (D) étant alors respectivement dures.

6. Flotteur selon l'une des revendications 1 à 5, caractérisé en ce qu'une ou plusieurs couches textiles de consolidation sont incorporées entre les couches de mousse (C, D).

7. Flotteur selon l'une des revendications 1 à 6, caractérisé en ce que le corps de mousse (3) est constitué de segments durs (A) et de segments souples (B), disposés en alternance dans la direction axiale, les segments (A) étant alors durs dans la région des surfaces d'extrémité.

8. Flotteur selon l'une des revendications 1 à 7, caractérisé en ce que le corps de mousse (3) est formé, dans la région d'angle (7) entre la surface d'extrémité et le corps cylindrique, d'un segment de mousse souple (F), qui est disposé sur un segment de mousse dur (E), un renfort extérieur (8), réalisé en particulier à base de polyamide et de polyester, étant alors en plus présent.

9. Flotteur selon l'une des revendications 1 à 8, caractérisé en ce que la couverture textile (4) présente un angle de 54 à 65° par rapport à l'axe.

10. Flotteur selon la revendication 9, caractérisé en ce que l'angle est constant et est alors égal, en particulier, à 60°.

11. Flotteur selon la revendication 9, caractérisé en ce que la valeur de l'angle est segmentée, et ce, en alternance, en un angle de 54° (segment A) et un angle de 65° (segment B), l'angle étant alors égal à 54° dans la région des surfaces d'extrémité.

12. Flotteur selon l'une des revendications 1 à 11, caractérisé en ce que la couverture extérieure (5) se compose d'un élastomère résistant aux intempéries et au vieillissement, en particulier d'un copolymère d'éthylène-propylène-diène.

13. Flotteur selon l'une des revendications 1 à 11, caractérisé en ce que la couverture extérieure (5) se compose d'un élastomère thermoplastique à base d'un mélange de polyéthylène et de polypropylène.

14. Flotteur selon l'une des revendications 1 à 11, caractérisé en ce que la couverture extérieure (5) se compose d'une matière thermoplastique à base de polyéthylène, de polypropylène ou de poly(chlorure de vinyle).

15. Flotteur selon l'une des revendications 1 à 14, caractérisé en ce que des bandes (10), en un matériau hautement résistant à l'abrasion, sont rapportées en direction axiale, à distance l'une de l'autre, sur la couverture extérieure (5).

16. Flotteur selon l'une des revendications 1 à 15, caractérisé en ce que des anneaux (11) hautement résistants à l'abrasion sont rapportés en direction radiale sur la couverture extérieure (5), en particulier dans la région distinctive.
